# EUROPEAN PATENT APPLICATION

(11) **EP 0 530 918 A2**
(43) Date of publication of application: **10.03.1993**
(21) Application number: 92202648.9
(22) Date of filing: 01.09.1992
(51) Int. Cl.: H04N 9/64, H04N 9/78

(54) **Motion adaptive picture signal processing**

(30) Priority: 02.09.1991 EP 91202220
(71) Applicant: Philips Electronics N.V., 5621 BA Eindhoven (NL)
(72) Inventor: Fuhren, Marcel, NL-5656 AA Eindhoven (NL); Sturm, Adriaan Peter Eduard, NL-5656 AA Eindhoven (NL)
(74) Representative: Steenbeek, Leonardus Johannes

(57) **Abstract**

In a motion adaptive picture signal processing arrangement comprising a time-variant picture signal processor (101), a time-invariant picture signal processor (103), and a combining circuit (105) controlled by a motion detector (109) for combining outputs of the time-invariant (103) and time-variant (101) signal processors to furnish an output signal, the time-invariant picture signal processor (103) comprises a non-linear comb filter including a first averager (411,413) for averaging a picture line signal and a first inverted previous picture line signal to provide a first average signal, a second averager (415,417) for averaging a second previous picture line signal and the first inverted previous picture line signal to provide a second average signal, and a median filter (407,419) for filtering the picture line signal, the first inverted previous picture line signal, the second previous picture line signal and the first and second average signals to provide a median signal.

## Description

The invention relates to motion adaptive picture signal processing in which a time-variant picture signal processing output and a time-invariant picture signal processing output are combined in dependence upon a motion detection control signal.

Such a motion adaptive picture signal processing is disclosed in International Application WO-A-90/13210 (PHQ 89,048). The time-variant signal processing described in that application provides a perfect elimination of cross-luminance and cross-chrominance components. However, when motion is present, artifacts occur, so that then normal PAL encoding and decoding methods are used instead of the time-variant extended PAL encoding and decoding methods to which the invention of WO-A-90/13210 pertains. Consequently, when motion is present, cross-color and cross-luminance are present again.

It is inter alia an object of the present invention to provide a motion adaptive picture signal processing arrangement in which when motion is present, instead of the normal PAL encoding and decoding methods proposed by the prior art document, a time-invariant signal processor is used which also eliminates cross-components to a large extent, and which more specifically, also allows for a good picture quality upon display when motion has been erroneously detected.

For this purpose, one aspect of the invention provides a motion adaptive picture signal processing arrangement as defined in claim 1. Another aspect of the invention provides a motion adaptive picture signal processing method as defined in claim 9. Advantageous embodiments are defined in the subclaims.

It is to be noted that a similar non-linear comb filter is known as such from Japanese Patent Application JP-A-3/71786. The inventors of the present invention have made the choice that their time-invariant picture processor should include a non-linear comb filter and they have selected this non-linear comb filter from the vast amount of known comb filters for the following reasons. When motion is detected between two successive fields of a interlaced picture signal, high vertical frequencies in the picture signal cause erroneous indications that motion is present, so that in the prior art arrangement, unnecessarily recourse is had to the low quality normal PAL encoding and decoding techniques. The selected non-linear comb filter appeared not only to be a good intra-field filter suitable for pictures with motion; because of its non-linear behavior, it also appeared to have a excellent step response in the vertical direction, so that even when motion has been detected erroneously because of high vertical frequencies, an excellent picture quality upon display is obtained. Finally, the selected comb filter avoids cross-components to a large extent, so that in the motion adaptive arrangement according to the present invention, high quality pictures without cross-components are obtained both when motion is present and when motion is absent.

These and other aspects of the invention will be apparent from and elucidated with reference to the embodiments described hereinafter.

In the drawings:
Fig. 1 shows a block schematic circuit diagram of an encoder in accordance with the present invention;
Fig. 2 shows a block schematic circuit diagram of a decoder in accordance with the present invention;
Fig. 3 shows the time-invariant branch of the decoder of Fig. 2;
Fig. 4 shows the time-invariant branch of the encoder of Fig. 1;
Fig. 5 shows a spatial filter circuit for use in the picture signal processing arrangement according to the present invention; and
Fig. 6 shows a block schematic circuit diagram of a further decoder in accordance with the present invention.

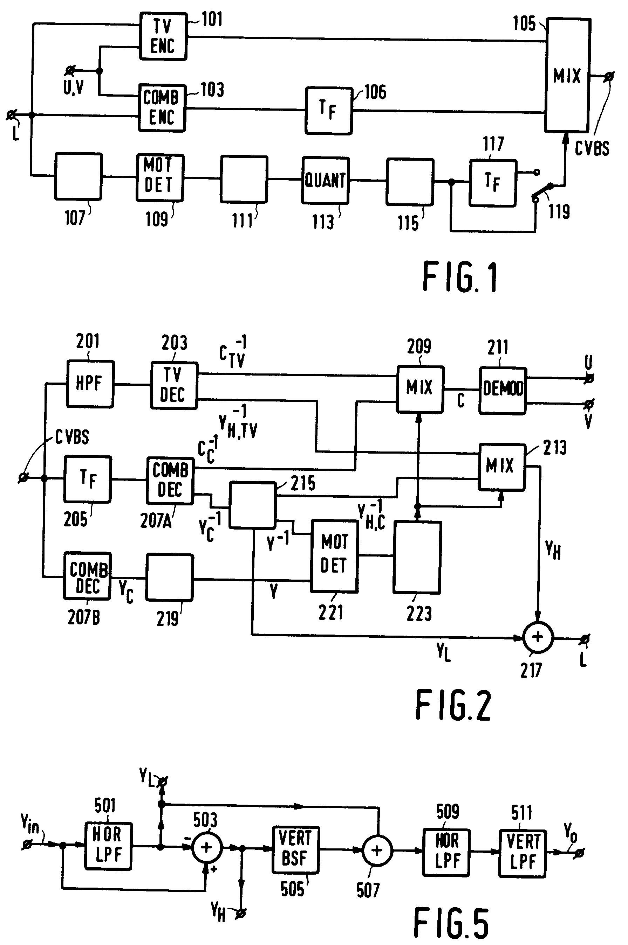

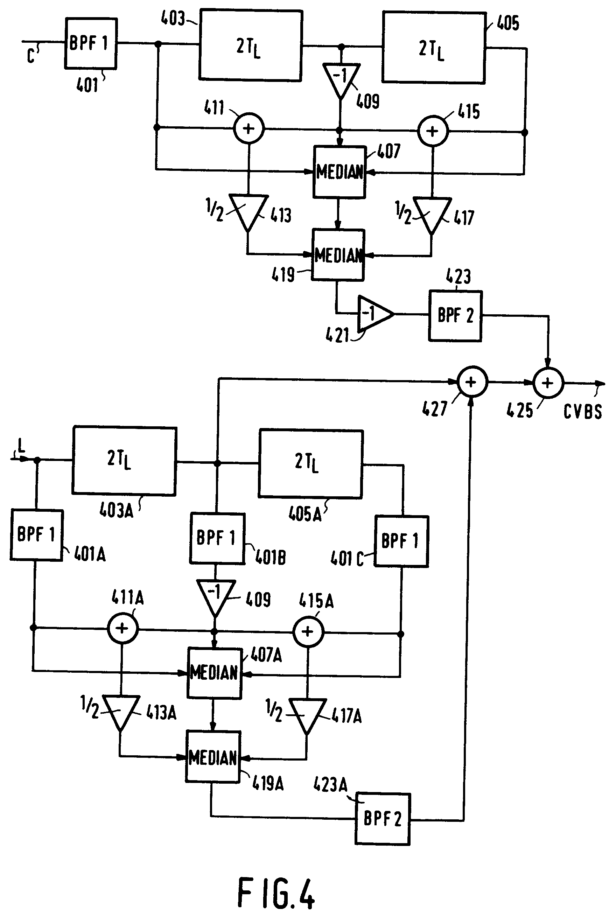

In the encoder according to the invention, which is shown in Fig. 1, a luminance signal L is applied to a time-variant encoder 101 and to a time-invariant comb filter encoder 103. One preferred embodiment of the time-variant encoder 101 has been described in detail in the International Application WO-A-90/13210 (PHQ 89,048), so that any further description is superfluous and is omitted here. Alternatively, the time-variant encoder shown in Fig. 4 of European Patent Application EP-A-0,390,271 (PHN 12,893) can be used to implement the time-variant encoder 101. The time-invariant comb filter encoder 103 will be described in detail hereinafter with reference to Fig. 4. Chrominance signals U,V are also applied to the encoders 101 and 103. Outputs of the encoders 101 and 103 are combined in a mixer 105 which furnishes the composite video signal CVBS. As the time-variant encoder 101 has a processing delay of one field, the output signal of the comb filter encoder 103 is delayed by a compensating field delay 106 before it is applied to the mixer 105.

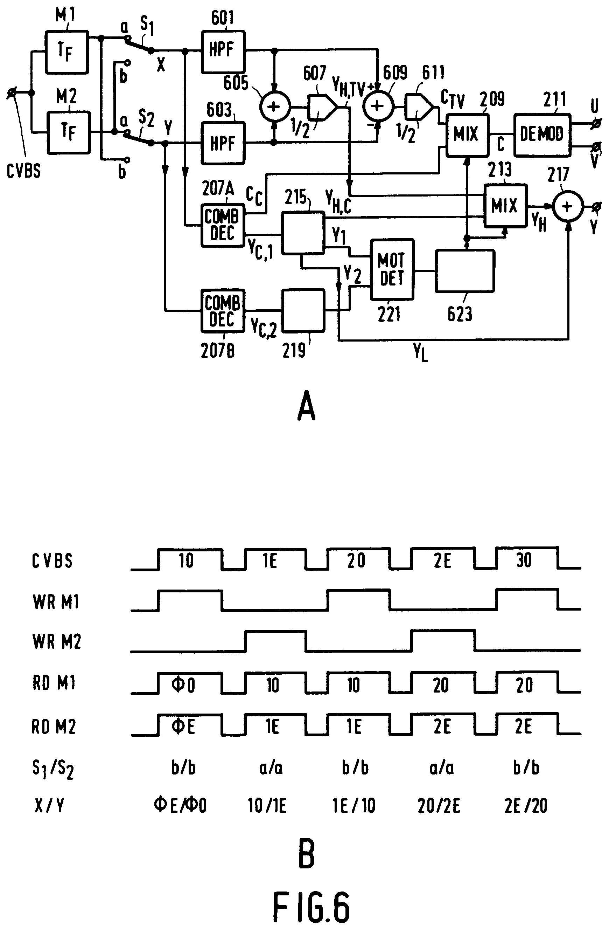

The luminance signal L is also applied to the cascade arrangement of circuit elements 107 to 119 to furnish a motion-dependent control signal for controlling the mixer 105. The spatial filter 107 will be described in greater detail hereinafter with reference to Fig. 5. The output signal of the spatial filter 107 is applied to a pixel motion detector 109. Preferably, the transient adaptive motion detector described in European Patent Application EP-A-0,344,843 (PHN 12,578) is used for this purpose. The motion detector 109 comprises any (field) delays necessary to perform the motion detection. Since this motion detector may yield spatially rather inconsistent motion decisions, the output signal of pixel motion detector 109 is applied to a spatial low-pass filter 111. The output signal of the spatial low-pass filter 111 is applied to a quantizer 113 which again furnishes binary motion decisions. To allow for a smooth mixing between time-variant encoding and comb filter encoding, the output signal of the quantizer 113 is applied to a spatial low-pass filter 115. To obtain motion decisions which are identical for both fields of a frame, which is necessary in view of the time-variant intra-frame encoding in block 101, the output signal of the low pass filter 115 is applied directly and through a field delay 117 to switching contacts of a field-alternating switch 119, which supplies the motion dependent control signal to the mixer 105.

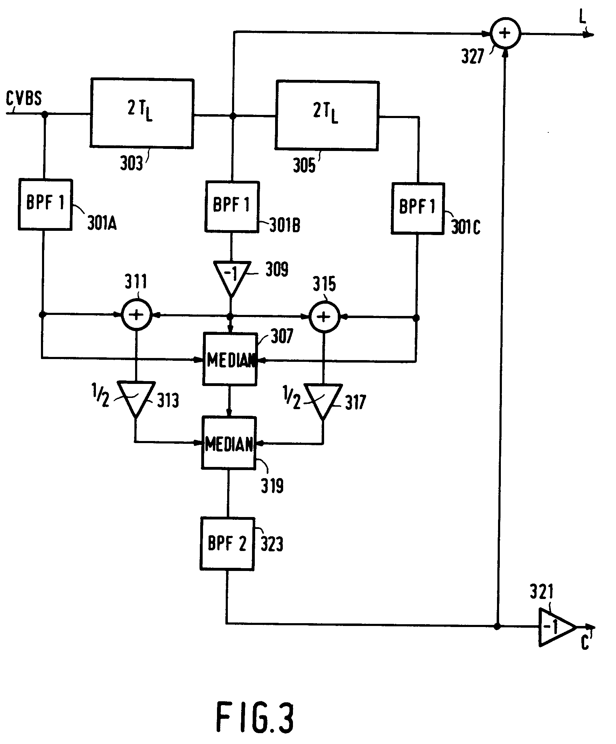

In the decoder according to the invention which is shown in Fig. 2, a composite video signal CVBS is applied to a time-variant decoder 203 through a high pass filter 201, to a comb filter decoder 207A through a field delay 205 compensating for the processing delay of time variant decoder 203, and to a comb filter decoder 207B. One preferred embodiment of the time-variant decoder 203 has been described in detail in the International Application WO-A-90/13210 (PHQ 89,048), so that any further description is superfluous and is omitted here. Alternatively, the time-variant decoder shown in Fig. 5 of European Patent Application EP-A-0,390,271 (PHN 12,893) can be used to implement the time-variant decoder 203. The time-invariant comb filter decoders 207A and 207B are identical and will be described in detail hereinafter with reference to Fig. 3.

A mixer 209 combines a time-variantly decoded chrominance signal C_{TV}⁻¹ furnished by the time-variant decoder 203 and a comb filtered decoded chrominance signal C_{c}⁻¹ furnished by the comb filter decoder 207A. The "-1" indicates that the signal is delayed one field period with respect to the input signal. A color demodulator 211 demodulates the mixed chrominance signal and furnishes chrominance signals U and V. A mixer 213 combines a time-variantly decoded high-frequency luminance signal Y_{H,TV}⁻¹ furnished by the time-variant decoder 203 and a comb filtered decoded high-frequency luminance signal Y_{H,C}⁻¹ furnished by the comb filter decoder 207A through a spatial filter 215. The spatial filter 215 also furnishes a low-frequency luminance signal Y_{L} which is combined by an adder 217 with the high-frequency luminance signal Y_{H} furnished by the mixer 213.

To obtain motion-dependent control signals for the mixers 209 and 213, a pixel motion detector 221 similar to the pixel motion detector 109 in the encoder of Fig. 1, receives a luminance signal Y⁻¹ from the previous field from the comb filter decoder 207A through the spatial filter 215 and a luminance signal Y from the present field from the comb filter decoder 207B through a spatial filter 219. The spatial filters 215 and 219 will be described in greater detail hereinafter with reference to Fig. 5. If one would be satisfied to use only low-frequency luminance components to detect motion, the inputs of the pixel motion detector 221 might have been coupled through suitably designed low-pass filters to the input and the output, respectively, of the field delay 205. However, because it is preferred to use all of the luminance spectrum for motion detection, the outputs of the comb filter decoders 207a and 207B are used. It is not possible to use the intra-frame time-variant decoder output for motion detection, because the high-frequency luminance components of both fields of a frame are made identical in that method. It goes without saying that the output signals of the comb filter decoders 207A and 207B can be used reliably for motion detection when in the encoder, the comb filter encoder branch has been chosen. If in the encoder the time-variant encoder branch has been chosen, certain high-frequency vertical periodical chrominance structures may cause false motion decisions, but those frequency components are suppressed to some extent by the spatial filters 215 and 219, so that no problems occur in practice. The output signal of the pixel motion detector 221 is applied to a spatial consistency improvement circuit 223 which applies the motion-dependent control signals to the mixers 209 and 213. The spatial consistency improvement circuit 223 is similar to the circuit elements 111 to 119 shown in Fig. 1. In this manner, it is ensured that the manner in which the motion-dependent control signal is obtained in the decoder resembles as much as possible the manner in which it is obtained in the encoder, so that no artifacts result from the encoder and the decoder having taken different motion decisions.

It will be evident that in principle, the low-frequency luminance signal Y_{L} might equally well be obtained from the time-variant decoder branch, because the time-variant and the time-invariant branches only differ for high-frequency components. However, it is preferred to use the time-invariant decoder branch to obtain the low-frequency luminance signal Y_{L} because otherwise an additional compensating field memory for the low-frequency luminance signal in the time-variant decoder branch would be necessary.

In the time-invariant comb filter decoder shown in Fig. 3, a composite video signal CVBS is applied to a band-pass filter 301A and to a cascade arrangement of two double line delays 301 and 305. A first median filter 307 is coupled to an output of the band-pass filter 301A, to an output of the double line delay 303 through a band-pass filter 301B and an inverter 309, and to a output of the double line delay 305 through a band-pass filter 301C. A first averager consisting of a adder 311 and a halving circuit 313 averages the output of the band-pass filter 301A and the output of the inverter 309. A second averager consisting of an adder 315 and a halving circuit 317 averages the output of the band-pass filter 301C and the output of the inverter 309. A second median filter 319 is coupled to the outputs of the halving circuits 313 and 317 and to a output of the first median filter 307. An output of the second median filter 319 is coupled through a band-pass filter 323 and a inverter 321 to a chrominance output C. The inverter 321 provides a 180 degrees phase shift which cancels the 180 degrees phase shift caused by the inverter 309. An output of the band-pass filter 323 is further coupled to one input of an adder 327 which has another input coupled to the output of the double line delay 303. The adder 327 furnishes the luminance signal L. The band-pass filter 323 removes third harmonic frequency components which are caused by the non-linear behavior of the median filters 307 and 319.

The non-linear comb filter formed by the circuit elements 301A to 319 may be considered to include two linear comb filters, one using the double line delay 303 and having as its output the output of the halving circuit 313, and the other linear comb filter using the double line delay 305 and having as its output the output of the halving circuit 317. Both linear comb filters utilize the well known fact that the phase of the PAL chrominance subcarrier has been shifted through 180 degrees after two line periods. In dependence upon the video contents, the median filters 307 and 319 select the output of the first linear comb filter, the output of the second linear comb filter, or the band-pass filtered (and delayed) input signal as furnished by band-pass filter 301A, 301B or 301C. As the median filters 307 and 319 do not average their input signals but select between them, vertical chrominance transients and high frequency luminance transients are not degraded but kept unaffected by the non-linear comb filter. Consequently, a very good picture quality upon display is obtained.

In the time-invariant comb filter encoder shown in Fig. 4, a chrominance signal C modulated onto a subcarrier is applied to a cascade arrangement of a band-pass filter 401 and two double line delays 403 and 405. A first median filter 407 is coupled to a output of the band-pass filter 401, to an output of the double line delay 403 through an inverter 409, and to an output of the double line delay 405. A first averager consisting of an adder 411 and a halving circuit 413 averages the output of the band-pass filter 401 and the output of the inverter 409. A second averager consisting of an adder 415 ad a halving circuit 417 averages the output of the double line delay 405 and the output of the inverter 409. A second median filter 419 is coupled to the outputs of the halving circuits 413 and 417 and to an output of the first median filter 407. An output of the second median filter 419 is coupled through an inverter 421 and a band-pass filter 423 to a first input of an adder 425 which furnishes the composite video signal CVBS.

A luminance signal L is applied to a similar circuit 401A to 423A, which is not described in further detail. Corresponding elements have been given the same reference symbols with an additional letter. The output of the bad-pass filter 423A is subtracted from the output of the double line delay 403A in subtracter 427. An output of subtracter 427 is coupled to a second input of the adder 425. When the encoder of Fig. 4 is compared to the decoder of Fig. 3, it will be apparent that the same comb filter as is used in the decoder is present in both the luminance path and the chrominance path of the time-invariant encoder branch. The non-linear comb filter in the luminance encoder path removes those frequency components which will cause cross-color in the decoder. The non-linear comb filter in the chrominance encoder path removes those frequency components which will cause cross-luminance in the decoder. The combination of the encoder of Fig. 4 and the decoder of Fig. 3 avoids any cross-components while vertical transients are preserved.

One of the band-pass filters 423 and 423A can be omitted if the encoder circuit shown in Fig. 4 is slightly modified. In that modification, the circuit elements 421, 423, 425, 423A and 427 and their interconnections are replaced by the following configuration. The output of the median filter 419 is subtracted from the output of the median filter 419A, and the difference is band-pass filtered and applied to one input of an adder. Another input of this adder is coupled to the output of the double line delay 403A. The output of the adder furnishes the composite video signal CVBS.

It will be evident that if the non-linear comb filters shown in Figs. 3 and 4 are to filter NTSC signals rather than PAL signals, the double line delays will have to be replaced by single line delays. Also, the band-pass filter 301C in Fig. 3 (401C in Fig. 4) can be omitted if the input of the double line delay 305 (405A) is coupled to the output of the band-pass filter 301B (401B).

It is to be noted that while Figs. 3 and 4 show non-linear comb filters including cascade arrangements of two median filters each having three inputs, the non-prepublished German Patent Application 41.06.076.8 (PHD 91,024) shows an advantageous embodiment of a non-linear comb filter including a single median filter having five inputs with simplified comparison logic and several travelling time equalizing techniques. It goes without saying that (such) a single median filter having five inputs can be used instead of the cascade arrangement of two median filters each having three inputs, while also the travelling time equalizing techniques described in the German Patent Application 41.06.076.8 can advantageously be used in the motion adaptive picture signal processing arrangements according to the present invention.

In the spatial filter shown in Fig. 5, an input luminance signal Yᵢₙ is applied through a horizontal low-pass filter 501 to a negative input of a subtracter 503 and directly to a positive input of the subtracter 503. At the output of the horizontal low-pass filter 501, a low-frequency luminance signal Y_{L} is available which only comprises frequency components which in the composite video signal contain no chrominance. At the output of the subtracter 503, a high-frequency luminance signal Y_{H} is available. This high-frequency luminance signal Y_{H} is applied to a vertical band-stop filter 505, which preferably has a notch at one quarter of the field sampling frequency. The output of the vertical band-stop filter 505 is coupled to an adder 507, which also receives the output of the horizontal low-pass filter 501. The output of the adder 507 is coupled to a cascade arrangement of a horizontal low-pass filter 509 and a vertical low-pass filter 511 which furnishes a spatially filtered output luminance signal Yₒ. This cascade arrangement prevents ambiguities from occurring in the output luminance signal Yₒ with respect to motion detection.

If the spatial filter of Fig. 5 is applied in the encoder, the vertical band-stop filter 505 should include a cascade arrangement of two non-linear comb filters as shown in Fig. 3, so that the motion detector in the encoder receives a signal which resembles the signal which is applied to the motion detector in the decoder as much as possible. It has been found that for periodical vertical luminance components, such a non-linear comb filter can be considered as a linear vertical comb-filter which combines its input signal, the input signal delayed for two line periods and the input signal delayed for four line periods in a ratio ¼, ½, and ¼. (For NTSC signals, two single line delays are to be used instead of two double line delays.) Therefore, in the encoder, the vertical band-stop filter 505 should include a cascade arrangement of two of such linear vertical comb filters. In the decoder, in a simple embodiment, the vertical band-stop filter 505 may consist of a through-connection. However, it has been found that motion detection errors are reduced if in the decoder, the vertical band-stop filter 505 comprises a single linear vertical ¼, ½, ¼ comb filter as described above. In that case, the vertical band-stop filter of the encoder should comprise a cascade arrangement of three linear vertical ¼, ½, ¼ comb filters.

Fig. 6 shows an alternative embodiment of the decoder according to the invention, in which the combination of the field delay 117 and the switch 119 is no longer present, so that less hardware is required. Part A of Fig. 6 shows the block circuit diagram, while part B shows several (control) signals. In part A, the input composite video signal is applied to two field memories M1 and M2. The first line of part B shows the succession of a first odd field 1o, a first even field 1e, a second odd field 2o, a second even field 2e, and a third odd field 3o. The second and third lines of part B show the write control signals WR M1 and WR M2 of the field memories M1 and M2, respectively. The fourth and fifth lines of part B show the read control signals RD M1 and RD M2 of the field memories M1 and M2, respectively. An output of the field memory M1 is coupled to a switching contact a of a switch S1 and to a switching contact b of a switch S2. An output of the field memory M2 is coupled to a switching contact b of switch S1 and to a switching contact a of switch S2. The last but one line of part B shows the switch positions during the successive field periods, while the last line shows which field signals X,Y are available at the outputs of the switches S1,S2. As will be apparent from this last line, during each field period two fields of the same frame are available at the outputs of the switches S1, S2.

The output signal X of switch S1 is applied to comb filter 207A, while the output signal Y of switch S2 is applied to comb filter 207B. Elements 207A, 207B, 215, 219, 221, 209, 211, 213 and 217 and most of their interconnections correspond to what is shown in Fig. 2, so that only the differences with respect to Fig. 2 need further explanation. The output signal of the pixel motion detector 221 is applied to a spatial consistency improvement circuit 623 which applies the motion-dependent control signals to the mixers 209 and 213. The spatial consistency improvement circuit 623 is similar to the circuit elements 111 to 115 shown in Fig. 1.

The output signal X of switch S1 is further applied to a high-pass filter 601, while the output signal Y of switch S2 is applied to a high-pass filter 603. The outputs of the high-pass filters 601, 603 are averaged by an adder 605 and a halving circuit 607 which applies the high-frequency time-variantly filtered luminance signal Y_{H,TV} to the mixer 213. The outputs of the high-pass filters 601, 603 are further applied to a subtracter 609 and a halving circuit 611 which furnishes the time-variantly filtered chrominance signal C_{TV} to the mixer 209.

In the embodiment of Fig. 6, the time-variant decoder is formed by the circuit elements M1, M2, S1, S2, and 601 through 611. As a consequence of this preferred configuration of the time-variant decoder, and by coupling the inputs of the comb filter decoders 207A, 207B to the outputs of the switches S1, S2, the motion detector 221 supplies the same output signal during both field periods of a frame, so that the field memory 117 and the switch 219 are no longer required. It goes without saying that many other modifications may be designed by those skilled in the art without departing from the scope of the following claims.

## Claims

1. A motion adaptive picture signal processing arrangement, comprising a time-variant picture signal processor and a time-invariant picture signal processor coupled to an input of said arrangement, and a combining circuit for combining outputs of said time-invariant and time-variant signal processors to furnish an output signal of said arrangement in dependence upon a control signal furnished by a motion detector, characterized in that said time-invariant picture signal processor comprises a non-linear comb filter including a first averager for averaging a picture line signal and a first inverted previous picture line signal to provide a first average signal, a second averager for averaging a second previous picture line signal and said first inverted previous picture line signal to provide a second average signal, and a median filter for filtering said picture line signal, said first inverted previous picture line signal, said second previous picture line signal and said first and second average signals to provide a median signal.

2. A motion adaptive picture signal processing arrangement as claimed in claim 1, wherein said input of said arrangement is coupled to receive a composite video signal, and said motion detector has a first input coupled to said input of said arrangement through at least a field delay, a first non-linear comb filter and a first spatial filter, and a second input coupled to said input of said arrangement through at least a second non-linear comb filter and a second spatial filter.

3. A motion adaptive picture signal processing arrangement as claimed in claim 2, wherein said first spatial filter has an output for furnishing a low-frequency luminance signal, and said combining circuit includes means for furnishing a high-frequency luminance signal and means for adding said low-frequency signal to said high-frequency signal.

4. A motion adaptive picture signal processing arrangement as claimed in claim 1, wherein said motion detector comprises a cascade arrangement of a pixel motion detector, a first spatial filter, a quantizer, and a second spatial filter for furnishing said control signal to an output of said motion detector.

5. A motion adaptive picture signal processing arrangement as claimed in claim 1, wherein said non-linear comb filter further includes a band-pass filter coupled to said median filter.

6. A motion adaptive picture signal processing arrangement as claimed in claim 1, wherein said motion detector is coupled to said input of said arrangement through a spatial filter which comprises means coupled to an input of said spatial filter for furnishing a low-frequency signal and a high-frequency signal, means for vertically comb filtering said high frequency signal, and means for combining said low-frequency signal and said vertically comb filtered high frequency signal.

7. A motion adaptive picture signal processing arrangement as claimed in claim 6, wherein said vertically comb filtering means include a cascade arrangement of at least two linear vertical comb filters.

8. A motion adaptive picture signal processing arrangement as claimed in claim 6, wherein said vertically comb filtering means include a linear vertical comb filter having coefficients ¼, ½ and ¼.

9. A method of motion adaptive picture signal processing in which a time-variant picture signal processing output and a time-invariant picture signal processing output are combined in dependence upon a motion detection control signal, characterized in that said time-invariant picture signal processing comprises a non-linear comb filtering including the steps of averaging a picture line signal and a first inverted previous picture line signal to provide a first average signal, averaging a second previous picture line signal and said first inverted previous picture line signal to provide a second average signal, and median filtering said picture line signal, said first inverted previous picture line signal, said second previous picture line signal and said first and second average signals to provide a median signal.
